# EUROPÄISCHE PATENTANMELDUNG

(11) **EP 2 574 804 A1**
(43) Veröffentlichungstag der Anmeldung: **03.04.2013**
(21) Anmeldenummer: 12186508.3
(22) Anmeldetag: 28.09.2012
(51) Int. Cl.: F16C 33/60, F16C 33/62, F16C 29/00

(54) **Lagervorrichtung und Verfahren**

(30) Priorität: 30.09.2011 DE 102011083861
(71) Anmelder: Aktiebolaget SKF, 41550 Göteborg (SE)
(72) Erfinder: Faltus, Barbara, 97469 Gochsheim (DE); Gegner, Jürgen, 91301 Forchheim (DE); Greil, Peter, 91085 Weisendorf (DE); Herbst, Hubert, 97503 Gädheim (DE); Hofmann, Joachim, 97456 Dittelbrunn (DE); Schlier, Lorenz, 91058 Erlangen (DE); Travitzky, Nahum, 90409 Nürnberg (DE); Velde, Henryk, 97440 Werneck (DE)
(74) Vertreter: Schonecke, Mitja

(57) **Zusammenfassung**

Es wird eine Lagervorrichtung mit wenigstens einem Trägerelement (34), zumindest einem Laufbahnelement (36), welches wenigstens einen Bereich (38) aufweist, welcher aus einer Keramik gebildet ist, und mit wenigstens einer Befestigungseinheit (40) vorgeschlagen, welche das Laufbahnelement (36) an dem Trägerelement (34) befestigt.

## Beschreibung

Es ist eine Lagervorrichtung mit einem Element aus Keramik bekannt, welches eine Laufbahn bildet.

Die Aufgabe der Erfindung besteht insbesondere darin, eine gattungsgemäße Lagervorrichtung mit einer hohen Effizienz bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Es wird eine Lagervorrichtung mit wenigstens einem Trägerelement, zumindest einem Laufbahnelement, welches wenigstens einen Bereich aufweist, welcher aus einer Keramik gebildet ist, und mit wenigstens einer Befestigungseinheit vorgeschlagen, welche das Laufbahnelement an dem Trägerelement befestigt. Unter einer "Lagervorrichtung" soll insbesondere eine Gleitlagervorrichtung oder eine Wälzlagervorrichtung verstanden werden. Mit einer erfindungsgemäßen Ausbildung kann eine hohe Effizienz erreicht werden. Insbesondere kann das Laufbahnelement als Nocken einer Nockenwelle ausgebildet sein.

Vorzugsweise befestigt die Befestigungseinheit das Laufbahnelement zerstörungsfrei demontierbar an dem Trägerelement. Dadurch kann eine Weiterverwendbarkeit des Trägerelements bei einem Defekt des Laufbahnelements erreicht werden.

Mit Vorteil bestehen 30 bis 70 Volumenprozent des Bereichs aus FeSiCr. Auf diese Weise kann eine hohe Benutzbarkeitsdauer erreicht werden. Insbesondere kann eine vorteilhafte Kombination aus einer hohen Härte, Zähigkeit, Festigkeit und Verschleißfestigkeit erreicht werden.

Ferner wird vorgeschlagen, dass Null bis 25 Volumenprozent des Bereichs aus SiC bestehen. Dadurch kann eine hohe Härte des Bereichs erreicht werden, welche vorteilhaft für eine besonders hohe Benutzbarkeitsdauer des Bereichs ist.

In einer bevorzugten Ausgestaltung der Erfindung bestehen 30 bis 45 Volumenprozent des Bereichs aus Siliziumoxycarbid. Auf diese Weise kann eine lange Gebrauchsdauer und insbesondere eine hohe Härte des Bereichs erreicht werden.

Vorzugsweise ist das Laufbahnelement formschlüssig an dem Trägerelement befestigt, wodurch eine einfach Montage erreicht werden kann.

Mit Vorteil weist das Trägerelement wenigstens einen Bereich auf, welcher aus Titan und/oder Magnesium und/oder Aluminium gebildet ist. Hierdurch kann eine leichte Bauweise erzielt werden.

Weiterhin wird vorgeschlagen, dass der Bereich des Laufbahnelements eine Härte HV(10) aufweist, welche kleiner als 14 GPa ist. Dadurch kann bei einer hohen Härte des Bereichs bei einer Herstellung des Bereichs eine Formung des Bereichs erreicht werden, welche mit kostengünstigen Werkzeugen, wie insbesondere Werkzeugen aus Borcarbid, durchführbar ist.

Weitere Vorteile ergeben sich aus der folgenden Zeichnungsbeschreibung. In der Zeichnung sind Ausführungsbeispiele der Erfindung dargestellt. Die Zeichnung, die

Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Fig. 1 zeigt einen Schnitt durch eine erfindungsgemäße Lagervorrichtung,
Fig. 2 zeigt eine schematische Darstellung eines Herstellungsvorgangs,
Fig. 3 zeigt einen Schnitt durch ein alternatives Ausführungsbeispiel einer erfindungsgemäßen Lagervorrichtung, bei welcher ein Befestigungselement festgeschraubt ist,
Fig. 4 zeigt ein weiteres Ausführungsbeispiel einer erfindungsgemäßen Lagervorrichtung, wobei ein Laufbahnelement kreiszylinderförmig ausgebildet ist, und
Fig. 5 zeigt ein weiteres Ausführungsbeispiel einer erfindungsgemäßen Lagervorrichtung.

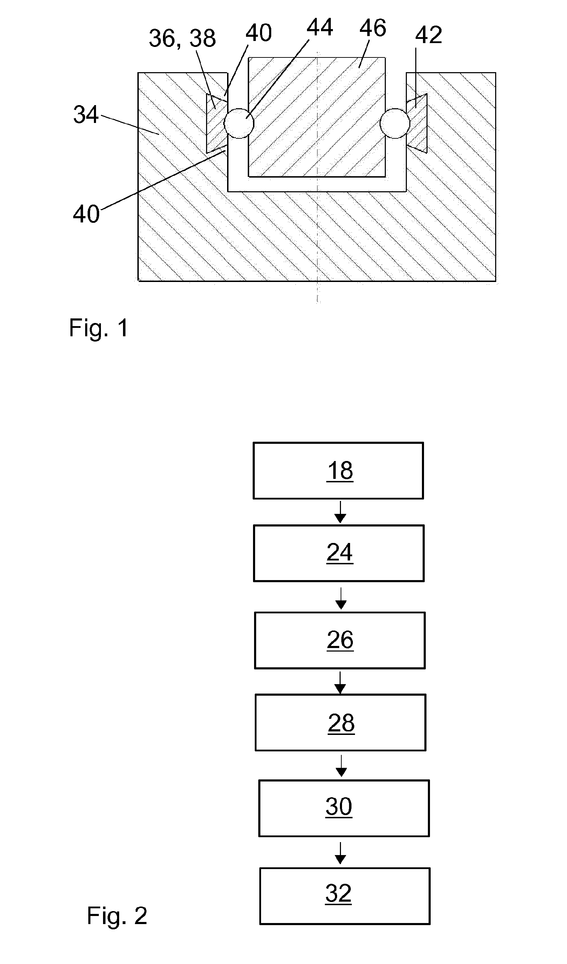

Figur 1 zeigt eine Lagervorrichtung mit einem Laufbahnelement 36 und einem als Gehäuse ausgebildeten Trägerelement 34, welche die Gewichtskraft des Laufbahnelements 36 aufnimmt. Hierzu weist das aus Titan gebildete Trägerelement 34 eine Befestigungseinheit 40 auf, welche das Laufbahnelement 40 formschlüssig an dem Trägerelement 34 befestigt. Die Befestigungseinheit 40 und das Laufbahnelement 36 bilden eine Schwalbenschwanzverbindung, wobei das Laufbahnelement 36 in einer Ausnehmung des Trägerelements 34 angeordnet ist. Alternativ ist denkbar, dass das Trägerelement 34 auf das Laufbahnelement 40 aufgeschrumpft wird oder an das Laufbahnelement 40 geklebt wird. Das Laufbahnelement 40 ist zerstörungsfrei von dem Trägerelement 34 demontierbar, indem das Laufbahnelement 40 entlang seiner Haupterstreckungsrichtung gegen den Widerstand von Gleitreibung aus der Befestigungseinheit 40 herausgezogen wird.

Die Lagervorrichtung weist ein weiteres Laufbahnelement 42 auf, das baugleich mit dem Laufbahnelement 36 ist und analog zu dem Laufbahnelement 36 an dem Trägerelement 34 befestigt ist. Außerdem weist die Lagervorrichtung Kugeln 44 auf, die zwischen einem Bauelement 46 und dem Laufbahnelement 36 angeordnet sind.

Das Bauelement 46 ist translatorisch entlang der Haupterstreckungsrichtung des Laufbahnelements 36 relativ zu dem Trägerelement 34 bewegbar. Bei einem derartigen Bewegen rollen die Kugeln 44 an den Laufbahnelementen 36, 42 und an dem Bauelement 46 ab. Die Vickershärte HV(10) des Laufbahnelements 36 liegt zwischen 8 und 14 Gigapascal.

Ein Bereich 38 des Laufbahnelements 36, der aus dem gesamten Laufbahnelement 36 besteht, ist zu fünfundvierzig Volumenprozent aus FeSiCr, zu fünfzehn Volumenprozent aus SiC und zu 35 Volumenprozent aus Siliziumoxycarbid gebildet. Fünf Volumenprozente des Bereichs 38 sind weitere Bestandteile, insbesondere Silizide. Durchschnittliche Volumenkonzentrationen von FeSiCr, SiC und Siliziumoxycarbid sind innerhalb des Laufbahnelements 36 konstant. Alternativ hierzu kann eine durchschnittliche Volumenkonzentration von SiC in einem ersten Teilbereich des Laufbahnelements 36, welcher einen größeren Abstand von einer Lauffläche des Laufbahnelements 36, an welcher eine der Kugeln 44 bei einer Bewegung des Bauelements 46 relativ zu dem Trägerelement 34 läuft, aufweist als ein zweiter Teilbereich des Laufbahnelements 36, kleiner sein als in dem zweiten Teilbereich, so dass der zweite Teilbereich härter ist als der erste Teilbereich.

Bei einem Verfahren zur Herstellung eines erfindungsgemäßen Laufbahnelements werden zunächst ein erstes Granulat, welches aus FeSiCr besteht, ein zweites Granulat, das aus SiC besteht, und ein drittes Granulat zu einer homogenen Mischung vermischt, welche den Ausgangsstoff 18 bildet (Figur 2). Statt jedem der Granulate kann auch ein Pulver verwendet werden. Das dritte Granulat besteht aus einem lösemittelfreien, festen Methylsiliconharz, welches in einem Temperaturbereich von 35-55 °C schmilzt und ab einer Temperatur von 350 °C thermisch zersetzt wird. Der Ausgangsstoff 18, der durch das Verfahren zu dem Laufbahnelement verarbeitet wird, besteht zu vierzig Volumenprozent aus FeSiCr, zu 10 Volumenprozent aus SiC und zu 50 Volumenprozent aus dem genannten Methylsilikonharz. Der Ausgangsstoff 18 ist frei von Katalysatoren.

In einem weiteren Verfahrensschritt findet eine Formgebung 24 für den Ausgangsstoff 18 statt. Dazu wird der Ausgangsstoff 18 durch Erhitzen zum Schmelzen gebracht und hierdurch in einen thermoplastischen Zustand überführt. Nachfolgend wird aus dem Ausgangsstoff 18 eine homogene Masse hergestellt. Die homogene Masse kann durch Extrudieren hergestellt werden, wobei durch Anpassen einer Düsengeometrie eines verwendeten Extruders beliebige kontinuierliche Formen extrudiert werden können. Die geschmolzene Extrusionsmasse kann im flüssigen Zustand weiterverarbeitet werden. Denkbar sind ein Prägen, Spritzgießen, Stanzen, Warmwalzen und Pressen. Der geschmolzene Ausgangsstoff 18 wird dabei in einem heißen Werkzeug oberhalb des Schmelzpunkts des Ausgangsstoffs 18 verarbeitet. Um hinreichende Formstabilität des geschmolzenen Ausgangsstoffs 18 zu erreichen, kann die Oberfläche des Ausgangsstoffs 18 im Werkzeug bei erhöhten Temperaturen zu einem Duroplasten vernetzt werden. Als weitere Weiterverarbeitung ist ferner ein Laminieren denkbar, wobei dies insbesondere für große oder hinterschnittene Bauteile gilt. Eine Formstabilität des durch die Formgebung 24 zu einem Formkörper geformten Ausgangsstoffs 18 wird durch Abkühlen erreicht. Die beschriebene Formgebung 24 ermöglicht eine endformnahe Fertigung bei niedrigen Temperaturen und geringem Materialverschleiß in Bearbeitungswerkzeugen. Durch kontinuierliche Verfahren wie Spritzgießen oder Extrudieren wird eine Serienanwendung ermöglicht. Ferner wird durch den hohen volumenprozentualen Anteil des genannten Methylsilikonharzes an dem Ausgangsstoff 18 eine geringe Abrasion von Werkzeugen sowohl beim Spritzgießen als auch bei der Extrusion und der folgenden Konturgebung erreicht.

Danach wird der Formkörper abgekühlt und anschließend in einem Druckofen unter Luftdruck bei erhöhten Temperaturen durch eine Vernetzung 26 vernetzt. Für polykondensativ vernetzende Teile muss ein atmosphärischer Überdruck angewandt werden, um Blasenbildung durch entweichende Gase zu verhindern. Beim Vernetzen wird der Schmelzbereich des Formkörpers durchlaufen.

Danach erfolgt bei einem ersten Pyrolyseschritt 28 bei Temperaturen von 250 °C bis 800 °C ein Organikausbrand und eine Pyrolyse von anorganischen Rückständen.

Bei einem zweiten Pyrolyseschritt 30 findet danach die Umsetzung des Formkörpers zum keramischen Körper statt, und zwar während einer Pyrolyse unter Stickstoffdruck bis fünf Megapascal bei Temperaturen bis 1500 °C, wobei bis 1000 °C alle organischen Anteile entfernt werden und bis 1500 °C ein nahezu vollständig dichtes Keramikkomposit entsteht. Aufgrund der geringen Temperaturen und der Vermeidung von Hilfsstoffen ergibt sich eine nur sehr geringe an der Oberfläche des Keramikkomposits befindliche Reaktionsschicht, die kostengünstig entfernt wird. Die Reaktionsschicht ist insbesondere dünn im Vergleich zu einer Sinterhaut, welche bei Standardkeramiken entfernt werden muss. Nachfolgend findet ein Endkonturschleifen 32 statt, wodurch ein geschliffenes Teil entsteht.

Durch mechanische Oberflächenbehandlung, wie Kugelstrahlen, Rollieren, Suspensions- oder Injektorverfestigungsstrahlen, können infolge der Erzeugung von Druckeigenspannungen in der Randschicht die statische und zyklische Festigkeit sowie die Verschleißbeständigkeit gesteigert werden. Durch Oberflächenbehandlung, wie Kugelstrahlen, kann die statische und zyklische Festigkeit gesteigert werden.

Die Vickershärte HV(10) des Laufbahnelements liegt zwischen 8 und 14 Gigapascal. Diese Vickershärte und die thermischen und elektrischen Eigenschaften des Laufbahnelements können durch die Zusammensetzung des Ausgangsstoffs 18 aus seinen drei Bestandteilen eingestellt werden. Das Keramikkomposit weist die gleiche Härte auf. Aufgrund der genannten Härte kann bei einer Endbearbeitung ein geringer Verschleiß von Schleifmitteln erreicht werden und es können kostengünstige Werkstoffe für die Hartbearbeitungswerkzeuge verwendet werden. Beispielsweise kann statt Diamant Borcarbid benutzt werden.

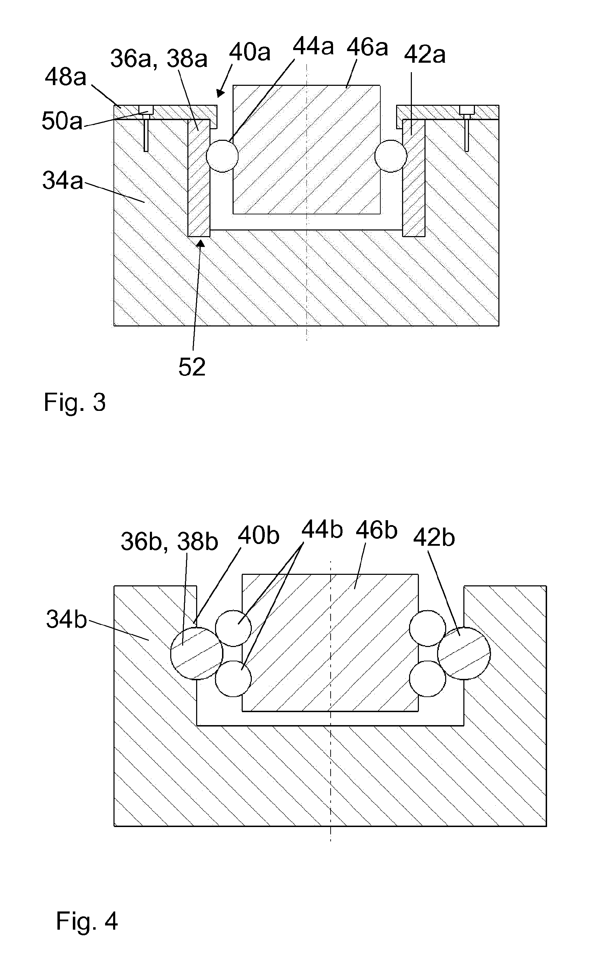

In Figur 3 bis 5 sind alternative Ausführungsbeispiele dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele in den Figuren 3 bis 5 die Buchstaben "a", "b" und "c" hinzugefügt. Die nachfolgende Beschreibung beschränkt sich im Wesentlichen auf die Unterschiede zu dem Ausführungsbeispiel in den Figuren 1 und 2, wobei bezüglich gleich bleibender Bauteile, Merkmale und Funktionen auf die Beschreibung des Ausführungsbeispiels in den Figuren 1 und 2 verwiesen werden kann.

Figur 3 zeigt einen Schnitt durch ein alternatives Ausführungsbeispiel einer Lagervorrichtung. Eine Befestigungseinheit 40a weist ein bis auf eine Ausnehmung L-förmiges Befestigungselement 48a, eine Schraube 50a und eine Nut 52a des Trägerelements 34a auf. Das Laufbahnelement 36a ist mit einem ersten Ende in der Nut 52a angeordnet. Das Befestigungselement 48a ist mittels der Schraube 50a an das Trägerelement 34a angeschraubt, so dass ein dem ersten Ende gegenüberliegendes zweites Ende des Laufbandelements 36a durch das Befestigungselement 48a an dem Trägerelemente 34a gehalten wird.

Figur 4 zeigt ein weiteres Ausführungsbeispiel einer erfindungsgemäßen Lagervorrichtung, wobei ein Laufbahnelement 36b kreiszylinderförmig ausgebildet ist. Ein Trägerelement 34b umgreift den Mantel des kreiszylinderförmigen Laufbahnelement 36b entlang eines Winkels von mehr als 180° aber weniger als 270°, wobei der Winkel bezüglich einer Hauptsymmetrieachse des kreiszylinderförmigen Laufbahnelement 36b gemessen ist. Zwei Kugeln 44b rollen bei einem Betriebsvorgang an dem Laufbahnelement 36b und einem Bauelement 46 ab. Alternativ ist denkbar, dass die Lagervorrichtung statt der zwei Kugeln 44b nur eine Kugel 44b aufweist, welche bei einem Betriebsvorgang an zwei Laufbahnelementen statt einem Laufbahnelement 36b abrollt.

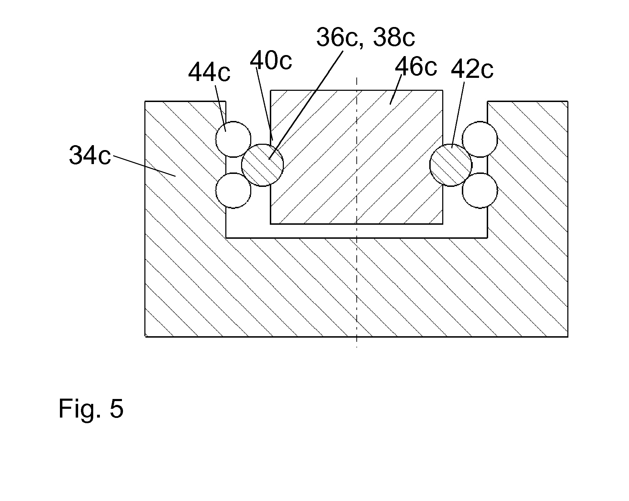

Figur 5 zeigt ein weiteres Ausführungsbeispiel einer erfindungsgemäßen Lagervorrichtung, wobei sich die Lagervorrichtung von der in Figur 5 gezeigten nur dadurch unterscheidet, dass das Laufbahnelement 36c an dem Bauelement 46c, welches ein Trägerelement ist, befestigt ist und die Kugeln 44c bei einem Betriebsvorgang an dem Trägerelement 34c abrollen.

### Bezugszeichenliste

| | |
|---|---|
| 18 | Ausgangsstoff |
| 24 | Formgebung |
| 26 | Vernetzung |
| 28 | Pyrolyseschritt |
| 30 | Pyrolyseschritt |
| 32 | Endkonturschleifen |
| 34 | Trägerelement |
| 36 | Laufbahnelement |
| 38 | Bereich |
| 40 | Befestigungseinheit |
| 42 | Laufbahnelement |
| 44 | Kugel |
| 46 | Bauelement |
| 48 | Befestigungselement |
| 50 | Schraube |
| 52 | Nut |

## Patentansprüche

1. Lagervorrichtung mit wenigstens einem Trägerelement (34), zumindest einem Laufbahnelement (36), welches wenigstens einen Bereich (38) aufweist, welcher aus einer Keramik gebildet ist, und mit wenigstens einer Befestigungseinheit (40), welche das Laufbahnelement (36) an dem Trägerelement (34) befestigt.

2. Lagervorrichtung nach Anspruch 1, wobei die Befestigungseinheit (40) das Laufbahnelement (36) zerstörungsfrei demontierbar an dem Trägerelement (34) befestigt.

3. Lagervorrichtung nach einem der Ansprüche 1 oder 2, wobei 30 bis 70 Volumenprozent des Bereichs (38) aus FeSiCr bestehen.

4. Lagervorrichtung nach einem der vorherigen Ansprüche, wobei Null bis 25 Volumenprozent des Bereichs (38) aus SiC bestehen.

5. Lagervorrichtung nach einem der vorherigen Ansprüche, wobei 30 bis 45 Volumenprozent des Bereichs (38) aus Siliziumoxycarbid bestehen.

6. Lagervorrichtung nach einem der vorherigen Ansprüche, wobei das Laufbahnelement (36) formschlüssig an dem Trägerelement (34) befestigt ist.

7. Lagervorrichtung nach einem der vorherigen Ansprüche, wobei das Trägerelement (34) wenigstens einen Bereich (38) aufweist, welcher aus Titan und/oder Magnesium und/oder Aluminium gebildet ist.

8. Lagervorrichtung nach einem der vorherigen Ansprüche, wobei der Bereich (38) des Laufbahnelements (36) eine Härte HV(10) aufweist, welche kleiner ist als 14 GPa.

9. Montageverfahren zur Montage einer Lagervorrichtung, insbesondere einer Lagervorrichtung nach einem der Ansprüche 1 bis 6, bei welchem ein Trägerelement (34) auf ein Laufbahnelement (36), welches wenigstens einen Bereich (38) aufweist, welcher aus einer Keramik gebildet ist, aufgeschrumpft wird und/oder an das Laufbahnelement (36) geklebt wird und/oder an das Laufbahnelement (36) geschraubt wird.

10. Verfahren zur Herstellung einer Lagervorrichtung, insbesondere einer Lagervorrichtung nach einem der Ansprüche 1 bis 6, bei welchem bei einer Herstellung des Laufbahnelements (36) wenigstens ein Extrudieren und/oder ein Spritzgießen und/oder ein Pressen verwendet wird.
